# EUROPEAN PATENT SPECIFICATION

(11) **EP 3 789 088 B1**
(45) Date of publication and mention of the grant of the patent: **05.11.2025**
(21) Application number: 20194245.5
(22) Date of filing: 03.09.2020
(51) Int. Cl.: A62C 3/16, A62C 35/10, A62C 35/13, A62C 37/08, A62C 37/11, A62C 37/36

(54) **CAPSULE TYPE FIRE EXTINGUISHER FOR PREVENTING BATTERY EXPLOSION AND BATTERY HAVING THE FIRE EXTINGUISHER**
KAPSELFEUERLÖSCHER ZUR VERHINDERUNG VON BATTERIEEXPLOSIONEN UND BATTERIE MIT DEM FEUERLÖSCHER
EXTINCTEUR DE TYPE CAPSULE PERMETTANT EMPÊCHER L'EXPLOSION DE BATTERIE ET BATTERIE COMPORTANT L'EXTINCTEUR

(30) Priority: 03.09.2019 KR 20190108651
(43) Date of publication of application: 10.03.2021
(73) Proprietor: Firekim Co., Ltd., Cheongju-si, Chungcheongbuk-do 28119 (KR); Kim, Byung Yul, Cheongju-si, Chungcheongbuk-do 28323 (KR)
(72) Inventor: Kim, Byung Yul, 28323 Chungcheongbuk-do (KR)
(74) Representative: Lenzing Gerber Stute

(56) References cited:
- EP-A1- 2 159 894
- WO-A1-2013/006121
- CN-U- 207 474 524
- JP-A- 2010 097 836

## Description

### BACKGROUND

### 1. Field

One or more example embodiments relate to a capsule-type fire extinguisher for preventing an explosion of a battery, and a battery including the fire extinguisher.

### 2. Description of Related Art

The recent development of electric vehicles, energy storage batteries, robots, satellites, or the like has spurred the research on high-performance secondary batteries capable of being charged or discharged repeatedly. In addition, there is also ongoing research on battery packs having the capacity and output power increased by connecting a plurality of secondary batteries in parallel or in series.

In a case of a high-performance and high-capacity battery pack, there is a risk of a fire and an explosion due to an overcharge and an overcurrent. To detect a potential risk of a fire and an explosion, a temperature sensor, a current sensor, a voltage sensor, and the like are used for the battery pack. In addition, to extinguish a fire when the fire is detected, a fire extinguisher is installed separately from the battery pack. However, in such a case where the fire extinguisher is installed separately from the battery pack, it may be complicated to install the fire extinguisher and not be easy to detect such a potential risk and a fire. In addition, once a fire occurs from an explosion of a battery, there may be a great deal of damage. Thus, there is a growing need for a fire extinguisher to prevent a fire and an explosion in an initial state before the fire and the explosion occurs in a battery.

EP 2 159 894 A1 and JP 2010 097836 A each disclose batteries comprising a capsule type fire extinguisher, the battery having a plurality of unit cells and a plurality of capsule type fire extinguishers. The fire extinguishers are configured to be exploded by external heat and then discharge the fire extinguishing material and comprise a forced exhaust on the side of the extinguisher capsule to destroy the extinguishing capsule and/or a corresponding unit cell.

Thus, there is a desire for a fire extinguisher that is installed in a battery in a simple and easy way and configured to prevent a fire or an explosion occurring when the battery expands by heat.

The above description has been possessed or acquired by the inventor(s) in the course of conceiving the present disclosure and is not necessarily an art publicly known before the present application is filed.

### SUMMARY

An aspect provides a capsule-type fire extinguisher for preventing a battery explosion having the features of claim 1, and a battery including the fire extinguisher having the features of claim 4.

Accordingly, there is provided a capsule-type fire extinguisher for preventing an explosion of a battery.

The capsule-type fire extinguisher includes an extinguishing capsule including an extinguishing material configured to extinguish a fire by being externally discharged as being expanded and exploded by external heat in an inside thereof, a fixing member configured to fix the extinguishing capsule to the battery, and a forced exhaust provided on one side of the extinguishing capsule and configured to destroy at least one of the extinguishing capsule or the battery.

The forced exhaust is formed with at least one material of a bimetallic metal, a shape-memory alloy, or a plastic material of which a shape is deformed by an electrical signal or heat.

The forced exhaust includes a support frame formed with at least one material of a bimetallic metal, a shape-memory alloy, or a plastic material of which a shape is deformed by an electrical signal or heat, and a protrusion formed by protruding from at least one side of the support frame. As a shape of the support frame is deformed by an electrical signal or heat, the support frame is configured to press toward at least one side of the extinguishing capsule or the battery. The forced exhaust further includes an elastic support configured to elastically support the support frame. The forced exhaust is disposed between the extinguishing capsule and the battery. The protrusion is disposed on both directions such that the forced exhaust destroys both the extinguishing capsule and the battery.

The forced exhaust may be inserted into the fixing member to be disposed between the extinguishing capsule and the battery.

The fixing member may include a metal or polymer and be formed with a non-flammable and flame-retardant material.

According to another example embodiment, there is provided a battery including a capsule-type fire extinguisher having the features described above. The battery may include a plurality of unit cells, and a plurality of capsule-type fire extinguishers respectively provided in the unit cells.

The battery may further include a feeding pipe connected to each extinguishing capsule, and the forced exhaust may also be provided in the feeding pipe.

The forced exhaust may be disposed inside the extinguishing capsule or between the extinguishing capsule and the corresponding unit cell. Each of the capsule-type fire extinguishers may further include a fixing member configured to fix the extinguishing capsule to the corresponding unit cell, wherein the fixing member includes a metal or polymer and is formed with a non-flammable and flame-retardant material. The forced exhaust may be inserted into the fixing member to be disposed between the extinguishing capsule and the unit cell.

Additional aspects will be set forth in part in the description which follows and, in part, will be apparent from the description, or may be learned by practice of the disclosure.

### BRIEF DESCRIPTION OF THE DRAWINGS

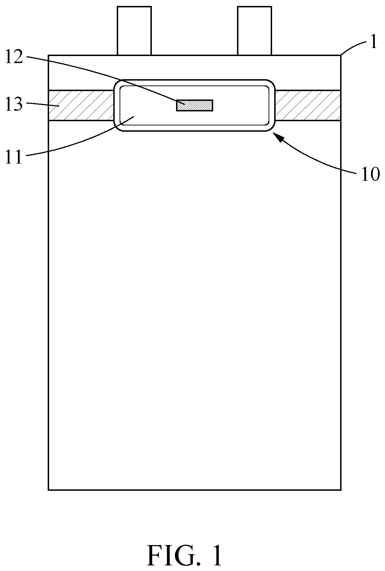

These and/or other aspects, features, and advantages of the present disclosure will become apparent and more readily appreciated from the following description of example embodiments, taken in conjunction with the accompanying drawings, in which Figs. 1 - 3 are not according to the invention and are present for illustration purposes only.
FIG 1 is a front view of an example of a battery to which a capsule-type fire extinguisher is attached;
FIGS. 2A through 2D are cross-sectional views of a capsule-type fire extinguisher;
FIG 3 is a schematic diagram illustrating a forced exhaust of a capsule-type fire extinguisher;
FIG 4 is a diagram illustrating an operation of a capsule-type fire extinguisher according to an example embodiment; and
FIG 5 is a diagram illustrating another example of a battery to which a capsule-type fire extinguisher is applied according to an example embodiment.

### DETAILED DESCRIPTION

Hereinafter, example embodiments will be described in detail with reference to the accompanying drawings. It should be understood, however, that there is no intent to limit this disclosure to the particular example embodiments disclosed.

The terminology used herein is for the purpose of describing particular example embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof. In addition, terms such as first, second, A, B, (a), (b), and the like may be used herein to describe components. Each of these terminologies is not used to define an essence, order, or sequence of a corresponding component but used merely to distinguish the corresponding component from other component(s). It should be noted that if it is described in the specification that one component is "connected," "coupled," or "joined" to another component, a third component may be "connected," "coupled," and "joined" between the first and second components, although the first component may be directly connected, coupled or joined to the second component.

Hereinafter, example embodiments will be described in detail with reference to the accompanying drawings. In the description of example embodiments, detailed description of well-known related structures or functions will be omitted when it is deemed that such description will cause ambiguous interpretation of the present disclosure. Regarding the reference numerals assigned to the elements in the drawings, it should be noted that the same elements will be designated by the same reference numerals, wherever possible, even though they are shown in different drawings.

Hereinafter, a capsule-type fire extinguisher 10 will be described with reference to FIGS. 1 through 4.

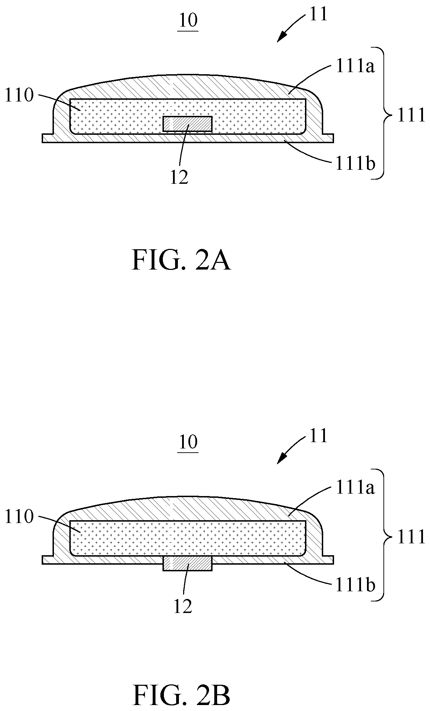

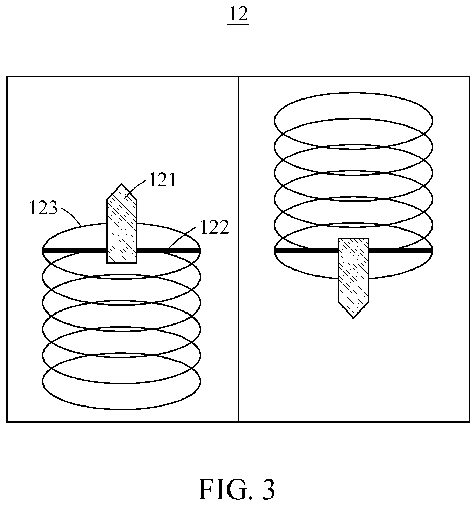

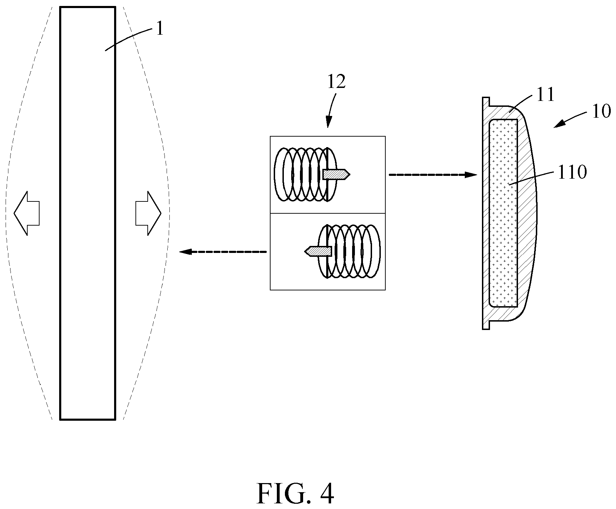

FIG 1 is a front view of a battery 1 to which the capsule-type fire extinguisher 10 is attached. FIGS. 2A through 2D are cross-sectional views of the capsule-type fire extinguisher 10 according to an example embodiment. FIG 3 is a schematic diagram illustrating a forced exhaust 12 of the capsule-type fire extinguisher 10. FIG 4 is a diagram illustrating an operation of the capsule-type fire extinguisher 10 according to an example embodiment.

Referring to the accompanying drawings, the capsule-type fire extinguisher 10 includes an extinguishing capsule 11 configured to accommodate therein an extinguishing material 110, a fixing member 13 configured to fix the extinguishing capsule 11 to the battery 1, and the forced exhaust 12 configured to destroy the extinguishing capsule 11 and the battery 1.

The extinguishing material 110 may be a material configured to extinguish a fire by being vaporized when it is heated to a predetermined temperature or higher. The extinguishing material 110 may be in a state of liquid or powder.

The extinguishing capsule 11 is configured to externally discharge the extinguishing material 110 when the extinguishing material 110 is vaporized at the temperature or higher and thus expanded and ruptured. A shape of the extinguishing capsule 11 is not limited to the illustrated shape. However, it is possible to change the shape and the size of the extinguishing capsule 11 according to an environment where it is used and installed.

The fixing member 13 is configured to attach the extinguishing capsule 11 to the battery 1. For example, the fixing member 13 may be formed with a metal or polymer material, and a non-flammable or flame-retardant material. In addition, the fixing member 13 has a shape corresponding to a surface of the extinguishing capsule 11 to which the fixing member 13 is fixed, and has a band shape, for example. However, the shape of the fixing member 13 is not limited to the illustrated shape.

The forced exhaust 12 is disposed on one side of the extinguishing capsule 11, and configured to destroy at least one of the extinguishing capsule 11 or the battery 1. For example, the forced exhaust 12 may destroy the extinguishing capsule 11 or the battery 1, or both the extinguishing capsule 11 and the battery 1. To this end, the forced exhaust 12 may be disposed inside or outside the extinguishing capsule 11, or disposed between the extinguishing capsule 11 and the battery 1.

As illustrated in FIG 2A, the forced exhaust 12 may be disposed inside the extinguishing capsule 11. In such a case, the forced exhaust 12 may be disposed at a position close to a wall 111 of the extinguishing capsule 11 to destroy the extinguishing capsule 11 by being disposed inside the extinguishing capsule 11. Although the forced exhaust 12 is illustrated as being disposed at a position close to a rear side 111b of the extinguishing capsule 11, it may be disposed at a position close to a surface side 111a or to a side surface.

As illustrated in FIG 2B, the forced exhaust 12 may be disposed on the rear side 111b of the extinguishing capsule 11, for example, a surface on which it is disposed on a side of the battery 1. In addition, the forced exhaust 12 may be disposed on an outer side of the wall 111 on the rear side 111b of the extinguishing capsule 11, or at least a portion of the forced exhaust 12 may be inserted into an inner side of the wall 111 or pass through the wall 111.

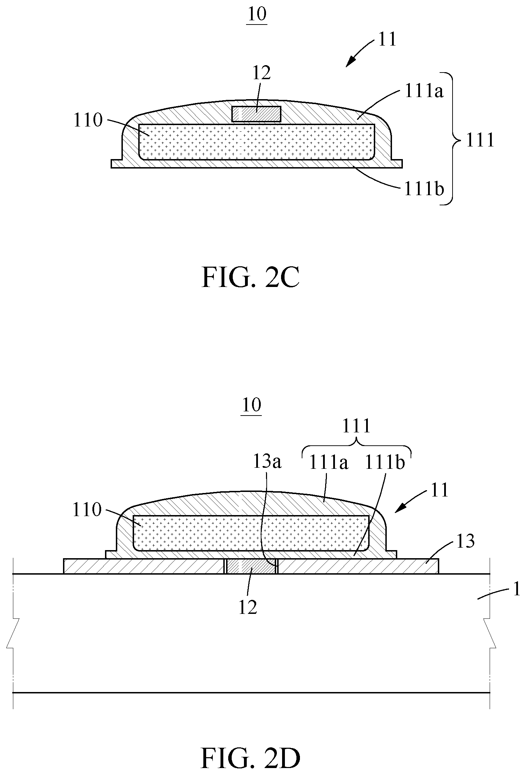

Alternatively, as illustrated in FIG 2C, the forced exhaust 12 may be disposed on the surface side 111a of the extinguishing capsule 11, for example, a surface of the extinguishing capsule 11 that is opposite to the rear side 111b. Similarly, the forced exhaust 12 may be disposed on an outer side of the wall 111 on the surface side 111a of the extinguishing capsule 11, or at least a portion of the forced exhaust 12 may be inserted into an inner side of the wall 111 or pass through the wall 111.

Alternatively, as illustrated in FIG 2D, the forced exhaust 12 may be disposed in the fixing member 13. A groove 13a may be formed at a position in the fixing member 13 between the extinguishing capsule 11 and the battery 1, and the forced exhaust 12 may be disposed in the groove 13a, thereby being capable of destroying at least one of the extinguishing capsule 11 or the battery 1.

The forced exhaust 12 includes a protrusion 121 to destroy the extinguishing capsule 11 or the battery 1, and a support frame 122 configured to press the protrusion 121 selectively toward the extinguishing capsule 11 or the battery 1.

The forced exhaust 12 may be formed with at least one material of a bimetallic metal, a shape-memory alloy, or a plastic material by which the shape of the support frame 122 is at least deformed by an electrical signal or heat. That is, as the support frame 122 is deformed by an electrical signal or heat, the protrusion 121 may be pressed toward the extinguishing capsule 11 and the battery 1, and thus the forced exhaust 12 may destroy at least one of the extinguishing capsule 11 or the battery 1.

In an embodiment of the invention, as illustrated in FIG. 4, the forced exhaust 12 is disposed between the extinguishing capsule 11 and the battery 1, and the protrusion 121 is disposed in both directions such that the forced exhaust 12 destroys both the extinguishing capsule 11 and the battery 1. In such a case, when the battery 1 is expanded by heat, the forced exhaust 12 may apply an impact to the battery 1 to prevent the battery 1 from being expanded, thereby preventing an explosion. In addition, by applying an impact to the extinguishing capsule 11, the forced exhaust 12 may destroy the extinguishing capsule 11 to discharge the extinguishing material 110, thereby preventing the occurrence of a fire or extinguishing the fire.

The protrusion 121 may be formed to allow the forced exhaust 12 to destroy the extinguishing capsule 11 or the battery 1.

The forced exhaust 12 further includes an elastic support 123 configured to apply an elastic force to the support frame 122.

The example of the battery 1 which is formed as a single cell has been described above. However, the capsule-type fire extinguisher 10 may also be applied to the battery 1 which includes a plurality of unit cells 1a.

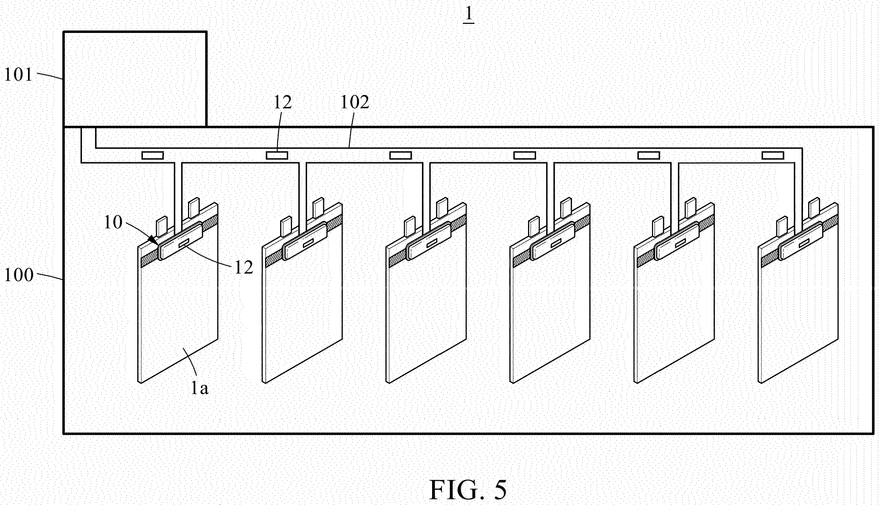

Referring to FIG 5, the battery 1 includes a plurality of unit cells 1a and a housing 100 configured to accommodate therein the unit cells 1a. The battery 1 is simply illustrated with other components omitted, except the unit cells 1a.

Each of the unit cells 1a includes the capsule-type fire extinguisher 10.

The capsule-type fire extinguishers 10 respectively provided in the unit cells 1a may be independently provided, or be connected through a feeding pipe 102 configured to supply the extinguishing material 110. In addition, the battery 1 includes a feeding tank 101 configured to supply the extinguishing material 110 to the feeding pipe 102.

The capsule-type fire extinguisher 10 may be provided in each of the unit cells 1a and the feeding pipe 102.

A position and an operation of the capsule-type fire extinguisher 10 provided in each of the unit cells 1a are the same as described above with reference to FIGS. 1 through 4. That is, the capsule-type fire extinguisher 10 may be provided on one side of each extinguishing capsule 11 and destroy at least one of each extinguishing capsule 11 and/or each unit cell 1a. Thus, a more detailed and repeated description of the capsule-type fire extinguisher 10 will be omitted here for brevity.

The forced exhaust 12 may also be provided in the feeding pipe 102. The forced exhaust 12 provided in the feeding pipe 102 may be formed in the same way as the forced exhaust 12 is formed in each unit cell 1a.

That is, the forced exhaust 12 may be formed by including the support frame 122 formed with at least one material of a bimetallic metal, a shape-memory alloy, or a plastic material of which a shape is deformed by an electrical signal or heat, and the protrusion 121 formed by protruding from the support frame 122. The forced exhaust 12 may be deformed in shape by an electrical signal or heat, thereby destroying the feeding pipe 102.

According to an example embodiment, when a unit cell 1a is heated to be a predetermined temperature or higher to be expanded, the forced exhaust 12 may apply an impact to the unit cell 1a and the extinguishing capsule 11 provided in the unit cell 1a, thereby destroying the unit cell 1a and the extinguishing capsule 11 to prevent the expansion of the unit cell 1a and prevent an explosion. In addition, the extinguishing material 110 discharged from the extinguishing capsule 11 may prevent the occurrence of a fire and extinguish the fire. Alternatively, by applying an electrical signal, it is possible to operate the forced exhaust 12 provided in the unit cell 1a.

In addition, when a unit cell 1a is heated to be a predetermined temperature or higher, a temperature of the feeding pipe 102 around the unit cell 1a may also increase to the predetermined temperature or higher, and thus the forced exhaust 12 provided in the feeding pipe 102 may operate to destroy the feeding pipe 102 and the extinguishing material 110 may be discharged.

Alternatively, when the unit cell 1a is heated to be the predetermined temperature or higher, an electrical signal may be generated to operate simultaneously the forced exhaust 12 provided in the unit cell 1a and the forced exhaust 12 provided in the feeding pipe 102.

As described above, the capsule-type fire extinguisher 10 may include the extinguishing capsule 11 including therein the extinguishing material 110 configured to expand at a predetermined temperature or higher, and may thus be small in size and simple in structure. Thus, it is possible to change the shape and the size of the capsule-type fire extinguisher 10 based on an environment where it is to be used and installed. In addition, the extinguishing capsule 11 may be destroyed by the extinguishing material 110, and also the forced exhaust 12 may also forcibly destroy the extinguishing capsule 11 and the battery 1 by an electrical signal or heat. Thus, it is possible to effectively prevent an explosion of the battery 1.

According to example embodiments described herein, a capsule-type fire extinguisher may be included in a battery, and prevent an explosion of the battery by destroying the extinguishing capsule and the battery.

The capsule-type fire extinguisher may include the extinguishing capsule of a capsule type that is configured to accommodate therein an extinguishing material, and is small in size and simple in structure. Thus, it is easy to change the shape and the size of the capsule-type fire extinguisher according to an environment where it is used and installed.

In addition, the extinguishing capsule may be automatically destroyed by the evaporation of the extinguishing material at a preset temperature or higher, and the extinguishing capsule and the battery may also be forcibly destroyed by an electrical signal or heat. Thus, it is possible to effectively prevent an explosion of the battery.

Advantageous effects of the capsule-type fire extinguisher for preventing a battery explosion and the battery including the capsule-type fire extinguisher are not limited to the foregoing, and other effects not described in the foregoing may be understood by those skilled in the art from the description provided above.

While this disclosure includes specific examples, it will be apparent to one of ordinary skill in the art that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined not by the detailed description, but by the claims and all variations within the scope of the claims are to be construed as being included in the disclosure.

## Claims

1. A capsule-type fire extinguisher (10) for preventing an explosion of a battery, comprising:
- an extinguishing capsule (11) comprising an extinguishing material (110) configured to extinguish a fire by being externally discharged as being expanded and exploded by external heat in an inside thereof,
- a fixing member (13) configured to fix the extinguishing capsule (11) to the battery; and
- a forced exhaust (12) provided on one side of the extinguishing capsule (11) and configured to destroy at least one of the extinguishing capsule (11) or the battery
wherein the forced exhaust (12) is formed with at least one material of a bimetallic metal, a shape-memory alloy, or a plastic material of which a shape is deformed by an electrical signal or heat, wherein the forced exhaust (12) comprises:
- a support frame (122) formed with at least one material of a bimetallic metal, a shape-memory alloy, or a plastic material of which a shape is deformed by an electrical signal or heat; and
- a protrusion (121) formed by protruding from at least one side of the support frame (122),
wherein, as a shape of the support frame (122) is deformed by an electrical signal or heat, the support frame (122) is configured to press toward at least one side of the extinguishing capsule (11) or the battery, and
- an elastic support configured to elastically support the support frame (122),
wherein the forced exhaust (12) is disposed between the extinguishing capsule (11) and the battery,
**characterized in that**
- the protrusion (121) is disposed on both directions such that the forced exhaust (12) destroys both the extinguishing capsule (11) and the battery.

2. The capsule-type fire extinguisher of claim 1, wherein the forced exhaust (12) is inserted into the fixing member (13) to be disposed between the extinguishing capsule (11) and the battery.

3. The capsule-type fire extinguisher of claim 1, wherein the fixing member (13) comprises a metal or polymer and is formed with a non-flammable and flame-retardant material.

4. A battery (1) comprising a capsule-type fire extinguisher (10) according to one of the previous claims, comprising:
a plurality of unit cells (1a); and
a plurality of capsule-type fire extinguishers (10) respectively provided in the unit cells (1a).

5. The battery of claim 4, further comprising:
a feeding pipe (102) connected to each extinguishing capsule (11),
wherein the forced exhaust (12) is also provided in the feeding pipe (102).

6. The battery of claim 5, wherein the forced exhaust (12) is disposed inside the extinguishing capsule (11) or between the extinguishing capsule (11) and a corresponding unit cell (1a).

7. The battery of claim 5, wherein each of the capsule-type fire extinguishers (10) further comprises:
a fixing member (13) configured to fix the extinguishing capsule (11) to a corresponding unit cell (1a),
wherein the fixing member (13) comprises a metal or polymer and is formed with a non-flammable and flame-retardant material.

8. The battery of claim 7, wherein the forced exhaust (12) is inserted into the fixing member (13) to be disposed between the extinguishing capsule (11) and the unit cell (1a).

## Patentansprüche

1. Kapselartiger Feuerlöscher (10) zum Verhindern einer Explosion einer Batterie, umfassend:
- eine Löschkapsel (11) mit einem Löschmaterial (110), das so konfiguriert ist, dass es einen Brand löscht, indem es durch externe Wärme in seinem Inneren expandiert und explodiert und nach außen abgegeben wird,
- ein Befestigungselement (13), das so konfiguriert ist, dass es die Löschkapsel (11) an der Batterie befestigt; und
- eine Zwangsentlüftung (12), die an einer Seite der Löschkapsel (11) vorgesehen ist und so konfiguriert ist, dass sie mindestens eine der Löschkapsel (11) oder der Batterie zerstört
wobei die Zwangsentlüftung (12) aus mindestens einem Material aus einem Bimetall, einer Formgedächtnislegierung oder einem Kunststoffmaterial gebildet ist, dessen Form durch ein elektrisches Signal oder Wärme verformt wird, wobei die Zwangsentlüftung (12) umfasst:
- einen Stützrahmen (122), der aus mindestens einem Material aus einem Bimetall, einer Formgedächtnislegierung oder einem Kunststoff besteht, dessen Form durch ein elektrisches Signal oder Wärme verformt wird und
- einen Vorsprung (121), der durch Vorstehen von mindestens einer Seite des Stützrahmens (122) gebildet ist,
wobei der Stützrahmen (122) so konfiguriert ist, dass er gegen mindestens eine Seite der Löschkapsel (11) oder der Batterie drückt, wenn seine Form durch ein elektrisches Signal oder Wärme verformt wird, und
- eine elastische Stütze, die so konfiguriert ist, dass sie den Stützrahmen (122) elastisch stützt,
wobei die Zwangsentlüftung (12) zwischen der Löschkapsel (11) und der Batterie angeordnet ist,
**dadurch gekennzeichnet, dass**
- der Vorsprung (121) in beiden Richtungen so angeordnet ist, dass die Zwangsentlüftung (12) sowohl die Löschkapsel (11) als auch die Batterie zerstört.

2. Der kapselartige Feuerlöscher nach Anspruch 1, wobei der Zwangsentlüftung (12) in das Befestigungselement (13) eingeführt ist, um zwischen der Löschkapsel (11) und der Batterie angeordnet zu sein.

3. Der kapselartige Feuerlöscher nach Anspruch 1, wobei das Befestigungselement (13) ein Metall oder Polymer umfasst und aus einem nicht brennbaren und flammhemmenden Material gebildet ist.

4. Batterie (1) mit einem kapselartigen Feuerlöscher (10) gemäß einem der vorstehenden Ansprüche, umfassend:
eine Vielzahl von Einheitszellen (1a); und
eine Vielzahl von kapselartigen Feuerlöschern (10), die jeweils in den Einheitszellen (1a) vorgesehen sind.

5. Die Batterie nach Anspruch 4, die ferner umfasst:
eine Zuführleitung (102), die mit jeder Löschkapsel (11) verbunden ist,
wobei die Zwangsentlüftung (12) ebenfalls in der Zuführleitung (102) vorgesehen ist.

6. Die Batterie nach Anspruch 5, wobei die Zwangsentlüftung (12) innerhalb der Löschkapsel (11) oder zwischen der Löschkapsel (11) und einer entsprechenden Zelle (1a) angeordnet ist.

7. Die Batterie nach Anspruch 5, wobei jeder der kapselartigen Feuerlöscher (10) ferner umfasst:
ein Befestigungselement (13), das so konfiguriert ist, dass es die Löschkapsel (11) an einer entsprechenden Einheitszelle (1a) befestigt, wobei das Befestigungselement (13) ein Metall oder Polymer umfasst und aus einem nicht brennbaren und flammhemmenden Material gebildet ist.

8. Die Batterie nach Anspruch 7, wobei die Zwangsentlüftung (12) in das Befestigungselement (13) eingesetzt wird, um zwischen der Löschkapsel (11) und der Einheitszelle (1a) angeordnet zu sein.

## Revendications

1. Extincteur de feu du type capsule (10) pour empêcher une explosion d'une batterie, comprenant :
- une capsule d'extinction (11) comprenant un matériau d'extinction (110) configuré pour procéder à l'extinction d'un feu en étant déchargé de façon externe dès lors qu'il est dilaté et qu'il explose du fait de la chaleur externe dans un intérieur afférent ;
- un élément de fixation (13) configuré pour fixer la capsule d'extinction (11) sur la batterie ; et
- un moyen d'évacuation forcée (12) prévu sur un côté de la capsule d'extinction (11) et configuré pour détruire au moins un composant parmi la capsule d'extinction (11) et la batterie,
dans lequel le moyen d'évacuation forcée (12) est formé à l'aide d'au moins un matériau parmi un métal bimétallique, un alliage à mémoire de forme et une matière plastique dont une forme est déformée par un signal électrique ou par la chaleur, dans lequel le moyen d'évacuation forcée (12) comprend :
- une structure de support (122) formée à l'aide d'au moins un matériau parmi un métal bimétallique, un alliage à mémoire de forme et une matière plastique dont une forme est déformée par un signal électrique ou par la chaleur ; et
- une protubérance (121) formée par projection en saillie depuis au moins un côté de la structure de support (122),
dans lequel, lorsqu'une forme de la structure de support (122) est déformée par un signal électrique ou par la chaleur, la structure de support (122) est configurée pour exercer une pression en direction d'au moins un côté de la capsule d'extinction (11) ou de la batterie ; et
- un support élastique configuré pour supporter élastiquement la structure de support (122),
dans lequel le moyen d'évacuation forcée (12) est disposé entre la capsule d'extinction (11) et la batterie,
**caractérisé en ce que** :
- la protubérance (121) est disposée selon deux directions de telle sorte que le moyen d'évacuation forcée (12) détruise à la fois la capsule d'extinction (11) et la batterie.

2. Extincteur de feu du type capsule selon la revendication 1, dans lequel le moyen d'évacuation forcée (12) est inséré à l'intérieur de l'élément de fixation (13) de telle sorte qu'il soit disposé entre la capsule d'extinction (11) et la batterie.

3. Extincteur de feu du type capsule selon la revendication 1, dans lequel l'élément de fixation (13) comprend un métal ou un polymère et est formé à l'aide d'un matériau non inflammable et ignifuge.

4. Batterie (1) comprenant un extincteur de feu du type capsule (10) selon l'une quelconque des revendications précédentes, comprenant :
une pluralité de cellules unitaires (1a) ; et
une pluralité d'extincteurs de feu du type capsule (10) respectivement prévus dans les cellules unitaires (1a).

5. Batterie selon la revendication 4, comprenant en outre :
un conduit d'alimentation (102) connecté à chaque capsule d'extinction (11),
dans laquelle le moyen d'évacuation forcée (12) est également prévu dans le conduit d'alimentation (102).

6. Batterie selon la revendication 5, dans laquelle le moyen d'évacuation forcée (12) est disposé à l'intérieur de la capsule d'extinction (11) ou entre la capsule d'extinction (11) et une cellule unitaire correspondante (1a).

7. Batterie selon la revendication 5, dans laquelle chacun des extincteurs de feu du type capsule (10) comprend en outre :
un élément de fixation (13) configuré pour fixer la capsule d'extinction (11) sur une cellule unitaire correspondante (1a),
dans laquelle l'élément de fixation (13) comprend un métal ou un polymère et est formé à l'aide d'un matériau non inflammable et ignifuge.

8. Batterie selon la revendication 7, dans laquelle le moyen d'évacuation forcée (12) est inséré à l'intérieur de l'élément de fixation (13) de telle sorte qu'il soit disposé entre la capsule d'extinction (11) et la cellule unitaire (1a).
